# EUROPEAN PATENT SPECIFICATION

(11) **EP 3 113 472 B1**
(45) Date of publication and mention of the grant of the patent: **21.10.2020**
(21) Application number: 16177076.3
(22) Date of filing: 30.06.2016
(51) Int. Cl.: H04N 1/32

(54) **DATA PROCESSING APPARATUS, METHOD FOR CONTROLLING DATA PROCESSING APPARATUS, AND STORAGE MEDIUM**
DATENVERARBEITUNGSVORRICHTUNG, VERFAHREN ZUR STEUERUNG DER DATENVERARBEITUNGSVORRICHTUNG UND SPEICHERMEDIUM
APPAREIL DE TRAITEMENT DE DONNÉES, PROCÉDÉ DE CONTRÔLE D'UN TEL APPAREIL ET SUPPORT DE STOCKAGE

(30) Priority: 30.06.2015 JP 2015132194
(43) Date of publication of application: 04.01.2017
(73) Proprietor: Canon Kabushiki Kaisha, Tokyo 146-8501 (JP)
(72) Inventor: TACHI, Daiki, Ohta-ku, Tokyo (JP)
(74) Representative: Canon Europe Limited

(56) References cited:
- EP-A1- 2 169 937
- EP-A2- 1 841 128
- US-A1- 2015 124 296
- US-B1- 6 396 848

## Description

### BACKGROUND OF THE INVENTION

### Field of the Invention

The present invention relates to a data processing apparatus, a method for controlling a data processing apparatus, and a storage medium.

### Description of the Related Art

Conventionally, data processing apparatuses have been configured to transmit electronic mail or facsimiles to a specified destination. Among such apparatuses, apparatuses have been configured to manage the result of the transmission as a communication management report, and transmit the managed communication management report to an external apparatus as a file (Japanese Patent Application Laid-Open No. 2003-274129).

Further, conventionally, there is a technique for setting, as a file name of a file to be transmitted, a time of the transmission of the file (Japanese Patent Application Laid-Open No. 2003-179714).

An administrator may want to know the result of transmission carried out at a certain specific time.

In conventional methods, the administrator confirms file transmission data and time and/or a file transmission result by opening files one by one.

This is because a name of a file is generated based on the date and time of the generation of the file (a name of a file is generated based on the date and time of the transmission of the file in Japanese Patent Application Laid-Open No. 2003-179714), and thus the administrator is not able to easily understand when the transmission indicated in the result of the transmission written in the file has been carried out only from the name of the file.

US 6,396,848 describes a communications terminal comprising a memory which stores a database cumulatively retaining a plurality of communications history files and a communications history report page including data of the communications history files of the database, wherein a controller controls to transfer the communication history report page to a data terminal when the data terminal selects the communication history report page using a page browsing procedure.

### SUMMARY OF THE INVENTION

According to a first aspect of the present invention, there is provided a data processing apparatus as specified in claims 1 to 9. According to a second aspect of the present invention, there is provided a method for controlling a data processing apparatus as specified in claim 10. According to a third aspect of the present invention, there is provided a computer readable storage medium as specified in claim 11.

Further features of the present invention will become apparent from the following description of exemplary embodiments with reference to the attached drawings.

### BRIEF DESCRIPTION OF THE DRAWINGS

Fig. 1 illustrates an entire data processing system according to an exemplary embodiment of the present invention.
Fig. 2 is a block diagram illustrating a configuration of a multifunction peripheral (MFP) according to the exemplary embodiment of the present invention.
Fig. 3 is a block diagram illustrating a configuration of a file server according to the exemplary embodiment of the present invention.
Fig. 4 is a flowchart illustrating an operation of the MFP according to the exemplary embodiment of the present invention.
Fig. 5 illustrates an operation screen of the MFP according to the exemplary embodiment of the present invention.
Fig. 6 is a flowchart illustrating an operation of the MFP according to the exemplary embodiment of the present invention.
Fig. 7 illustrates an operation screen of the MFP according to the exemplary embodiment of the present invention.
Fig. 8 illustrates an operation screen of the MFP according to the exemplary embodiment of the present invention.
Fig. 9 illustrates an operation screen of the MFP according to the exemplary embodiment of the present invention.
Fig. 10 illustrates an operation screen of the MFP according to the exemplary embodiment of the present invention.
Fig. 11 illustrates a transmission history database according to the exemplary embodiment of the present invention.
Fig. 12 is a flowchart illustrating an operation of the MFP according to the exemplary embodiment of the present invention.
Fig. 13 illustrates an operation screen of the MFP according to the exemplary embodiment of the present invention.
Fig. 14 is a flowchart illustrating an operation of the MFP according to the exemplary embodiment of the present invention.
Fig. 15 is a flowchart illustrating an operation of the MFP according to the exemplary embodiment of the present invention.

### DESCRIPTION OF THE EMBODIMENTS

In the following description, exemplary embodiments of the present invention will be described with reference to the drawings. However, the exemplary embodiments that will be described below do not limit the present invention defined according to the claims, and further, not all of combinations of features that will be described in the exemplary embodiments are necessarily essential to a solution of the invention.

Now, an exemplary embodiment of the present invention will be described below with reference to the drawings. Each of the embodiments of the present invention described below can be implemented solely or as a combination of a plurality of the embodiments or features thereof where necessary or where the combination of elements or features from individual embodiments in a single embodiment is beneficial.

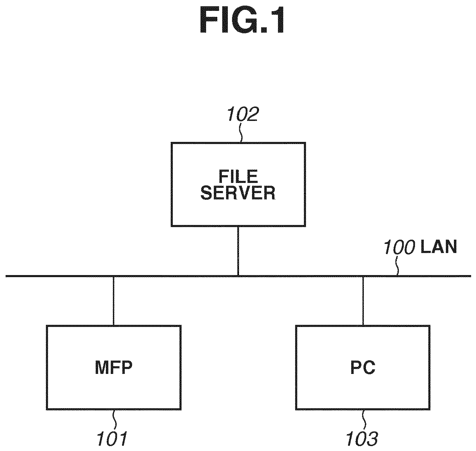

Fig. 1 is a block diagram illustrating a configuration of a data processing system according to the exemplary embodiment of the present invention.

The data processing system according to the present exemplary embodiment includes a multifunction peripheral (MFP) 101, which is one example of a data processing apparatus, a file server 102, and a personal computer (PC) 103. Besides them, a PC and/or a server may also be connected to a local area network (LAN) 100.

Further, the MFP 101 is not limited to an apparatus that communicates with the file server 102 and the PC 103 via wired communication such as the LAN 100, and may be an apparatus that communicates with the file server 102 and the PC 103 via wireless communication such as Wireless Fidelity (WiFi).

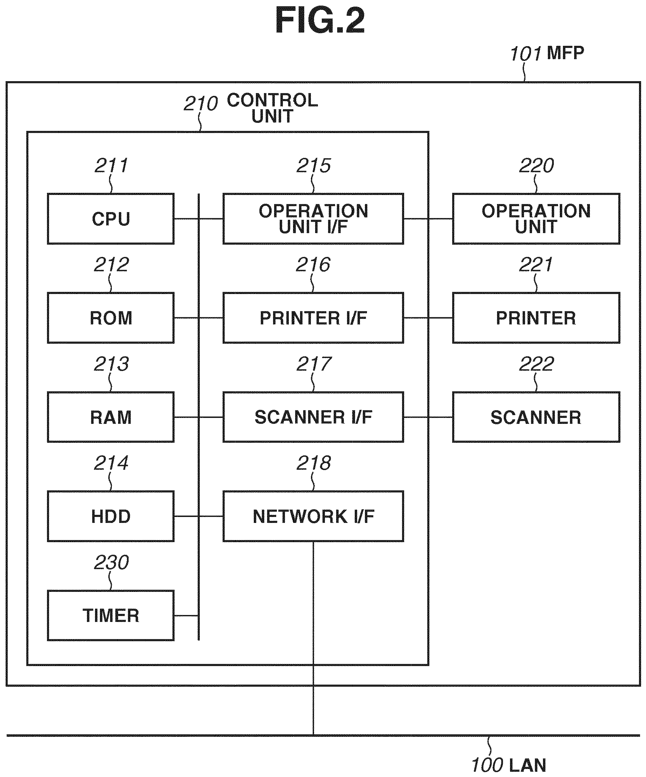

Fig. 2 is a block diagram illustrating a configuration of the MFP 101.

The MFP 101 includes a control unit 210, an operation unit 220, a printer 221, and a scanner 222. The operation unit 220 includes a display unit and hardware keys. The display unit is configured in such a manner that a touch panel sheet is attached on a liquid crystal display unit. The operation unit 220 displays an operation screen, a notification screen, and/or the like on the liquid crystal display unit. Further, the operation unit 220 receives an operation from a user via the touch panel sheet or the hardware keys.

The printer 221 prints an image onto a sheet based on image data transmitted from the control unit 210.

The scanner 222 reads an image on an original document, generates image data indicating the read image on the original document, and then transmits the generated image data to the control unit 210.

The control unit 210 includes a central processing unit (CPU) 211, a read only memory (ROM) 212, a random access memory (RAM) 213, a hard disk drive (HDD) 214, a timer 230, an operation unit interface (I/F) 215, a printer I/F 216, a scanner I/F 217, and a network I/F 218. Each of the units is connected via a bus.

The CPU 211 comprehensively controls the MFP 101 by executing a program stored in the ROM 212.

The ROM 212 stores various kinds of programs to be read out by the CPU 211.

The RAM 213 functions as a work area of the CPU 211.

The HDD 214 is a large-capacity storage medium storing the image data and/or an application program.

The timer 230 manages a time.

The operation unit I/F 215 controls an input and an output of data between the control unit 210 and the operation unit 220.

The printer I/F 216 performs control for transmitting and receiving a command to be used for the control unit 210 to control the printer 221 between the control unit 210 and the printer 221. Further, the printer I/F 216 performs control for transmitting the image data transmitted from the control unit 210 to the printer 221.

The scanner I/F 217 performs control for transmitting and receiving a command to be used for the control unit 210 to control the scanner 222 between the control unit 210 and the scanner 222. Further, the scanner I/F 217 performs control for receiving the image data from the scanner 222.

The network I/F 218 is connected to the LAN 100, and performs control for allowing the MFP 101 to communicate with an external apparatus, such as the file server 102 and the PC 103, via the LAN 100.

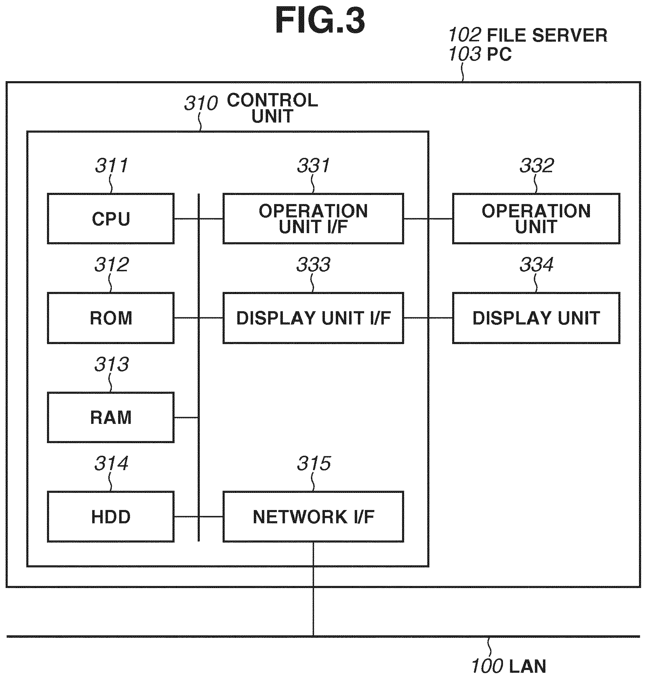

Fig. 3 is a block diagram illustrating a configuration of the file server 102. The PC 103 is also configured in a similar manner to the file server 102.

The file server 102 includes a control unit 310, an operation unit 332, and a display unit 334.

The control unit 310 includes a CPU 311, a ROM 312, a RAM 313, an HDD 314, an operation unit I/F 331, a display unit I/F 333, and a network I/F 315.

The CPU 311 comprehensively controls the file server 102 by executing a program stored in the ROM 312.

The ROM 312 stores various kinds of programs to be read out by the CPU 311.

The RAM 313 functions as a work area of the CPU 311.

The HDD 314 is a large-capacity storage medium storing image data and/or an application program.

The operation unit I/F 331 controls an input and an output of data between the control unit 310 and the operation unit 332.

The display unit I/F 333 controls an input and an output of data between the control unit 310 and the display unit 334.

The network I/F 315 is connected to the LAN 100, and performs control for allowing the file server 102 to communicate with the MFP 101, the PC 103, and/or the like via the LAN 100.

The above-described MFP 101 authenticates the user attempting to use the MFP 101, and permits the user to use the MFP 101 if the authentication has succeeded.

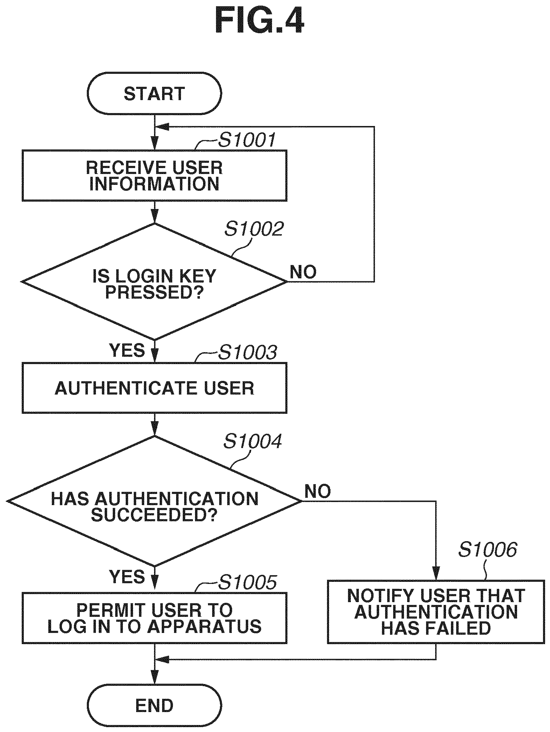

Fig. 4 is a flowchart illustrating processing in which the MFP 101 authenticates the user. The CPU 211 reads out the program stored in the ROM 212 into the RAM 213 and executes the read program, by which the processing illustrated in the flowchart of Fig. 4 is realized.

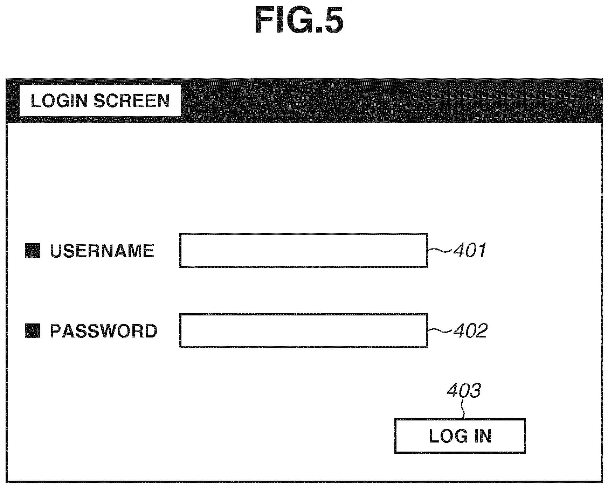

In step S1001, the CPU 211 causes a login screen illustrated in Fig. 5 to be displayed on the operation unit 220. The user operates the operation unit 220 to input a username and a password from the user. More specifically, the user touches an area 401, and inputs the username via a displayed keyboard. Then, the user touches an area 402, and inputs the password via a displayed keyboard. The CPU 211 stores the received username and password into the RAM 213. In the present example, the inputs of the username and the password have been described referring to the example in which the user inputs the username and the password via the displayed keyboards, but the present invention is not limited thereto. For example, the CPU 211 of the MFP 101 may acquire the username and the password in such a manner that the user holds a card carried along by the user closer to the MFP 101, by which the CPU 211 acquires the username and the password from the card via wireless communication.

In step S1002, the CPU 211 determines whether a login key 403 is pressed. If the CPU 211 determines that the login key 403 is not pressed (NO in step S1002), the processing returns to step S1001. On the other hand, if the CPU 211 determines that the login key 403 is pressed (YES in step S1002), the processing proceeds to step S1003.

In step S1003, the CPU 211 compares the received username and password with a username and a password stored in the HDD 214 in advance, thereby authenticating the user.

In step S1004, the CPU 211 determines whether the authentication of the user has succeeded. If the CPU 211 determines that the authentication of the user has failed (NO in step S1004), the processing proceeds to step S1006. In step S1006, the CPU 211 causes the failure in the authentication to be displayed on the operation unit 220.

On the other hand, if the CPU 211 determines that the authentication has succeeded (YES in step S1004), in step S1005, the CPU 211 permits the user to log in to the MFP 101. Then, the processing is ended. The CPU 211 stores the username of the user logged in to the MFP 101 in the RAM 213 so that the CPU 211 can manage the user logged in to the MFP 101. The user logged in to the MFP 101 is permitted to use the MFP 101. More specifically, after the authentication has succeeded, an operation screen for using the MFP 101 is displayed on the operation unit 220.

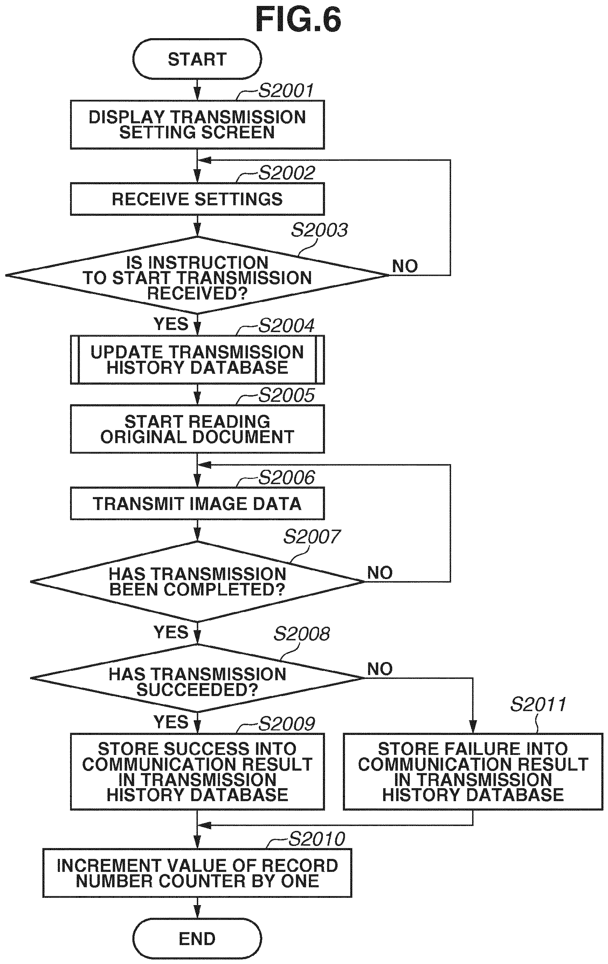

Fig. 6 is a flowchart illustrating processing in which the MFP 101 carries out a transmission job that transmits data to a specified destination. The CPU 211 reads out the program stored in the ROM 212 into the RAM 213 and executes the read program, by which the processing illustrated in the flowchart of Fig. 6 is realized.

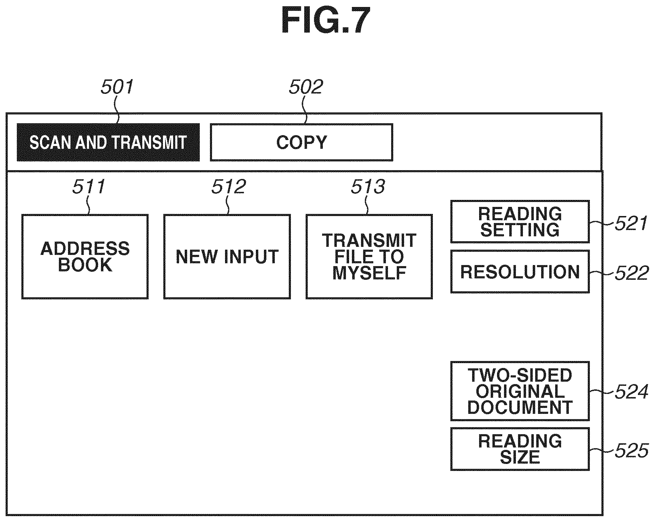

In step S2001, the CPU 211 causes a transmission setting screen to be displayed on the operation unit 220. Now, operation screens will be described with reference to Figs. 7 to 10.

Fig. 7 illustrates an example of the transmission setting screen. The user can select a function by operating an operation key 501 or an operation key 502 on the operation screen illustrated in Fig. 7. Fig. 7 illustrates the operation screen with the operation key 501 selected thereon. Fig. 7 illustrates "SCAN AND TRANSMIT" and "COPY" as examples of functions, but the MFP 101 may have a function other than them.

If selecting the operation key 501, the user can set a destination of image data to be transmitted by operating any of operation keys 511 to 513.

The operation key 511 is an address book key, and a content of an address book held in the HDD 214 is displayed if the operation key 511 is operated. The user can refer to the content registered in the address book, and set the content as the destination of the image data.

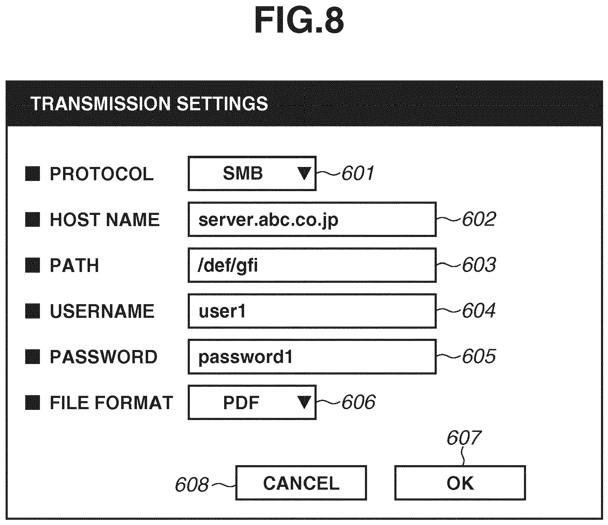

The operation key 512 is a new input key, and a screen for receiving an input of a new destination from the user is displayed if the operation key 512 is operated. The user can input the new destination via the displayed screen, and set the destination as the destination of the image data. The screen displayed at this time will be described below with reference to Fig. 8.

The operation key 513 is a key for transmitting a file to the user, and is an operation key operated when the user wants to set the user's own folder as the destination of the image data (when the user wants to transmit the file of the image data while specifying the user's own folder as the destination). If the user operates the operation key 513, the user's own folder is automatically set as the destination of the image data. The user's own folder is assumed to be managed in association with the user in the HDD 214 in advance.

An operation key 521 is an operation key used when the user sets whether the original document is read in full color or the original document is read in black and white. An operation key 522 is an operation key used when the user sets a reading resolution. An operation key 524 is an operation key used when the user sets one-sided/two-sided reading. An operation key 525 is an operation key used when the user sets a reading size.

The user operates the operation keys 521 to 524 to configure reading settings.

After such a screen is displayed, in step S2002, the CPU 211 receives the settings via the displayed screen. For example, the CPU 211 receives the reading settings, such as the setting specifying whether to read the original document in full color or read the original document in black and white, and the reading resolution. The CPU 211 stores the received reading settings into the HDD 214. Further, in step S2002, the CPU 211 receives transmission settings regarding the destination of the image data and a file format via any of screens illustrated in Figs. 8 to 10.

Fig. 8 illustrates one example of the operation screen displayed on the operation unit 220. The operation screen illustrated in Fig. 8 is displayed if the operation key 512 illustrated in Fig. 7 is pressed.

An area 601 is an area for receiving a selection of a transmission protocol. In the present example, Server Message Block (SMB), File Transfer Protocol (FTP), and Email (an electronic mail) are assumed to be displayed as options in a list presented in a drop-down format, but a transmission protocol other than them may be included in the options.

SMB is selected as the transmission protocol on the screen illustrated in Fig. 8.

An area 602 is an area for receiving a host name of a server that manages a folder to be set as the destination of the image data. For example, a host name of the file server 102 is input into the area 602.

An area 603 is an area for receiving a path of the folder to be set as the destination of the image data.

An area 604 is an area for receiving a username required to access the folder to be set as the destination of the image data.

An area 605 is an area for receiving a password required to access the folder to be set as the destination of the image data. The username and the password will be collectively referred to as authentication information.

An area 606 is an area for receiving a selection of the file format. In the present example, Portable Document Format (PDF) and Tag Image File Format (TIFF) are assumed to be displayed as options in a list presented in a drop-down format, but the area 606 may be prepared so as to include a file format other than them in the options.

If an OK key 607 is pressed, the transmission settings received via the screen are stored into the HDD 214 by the CPU 211. Then, the screen illustrated in Fig. 8 is closed, and the screen illustrated in Fig. 7 is displayed on the operation unit 220.

If a cancel key 608 is pressed, the transmission settings received via the screen are discarded. Then, the screen illustrated in Fig. 8 is closed, and the screen illustrated in Fig. 7 is displayed on the operation unit 220.

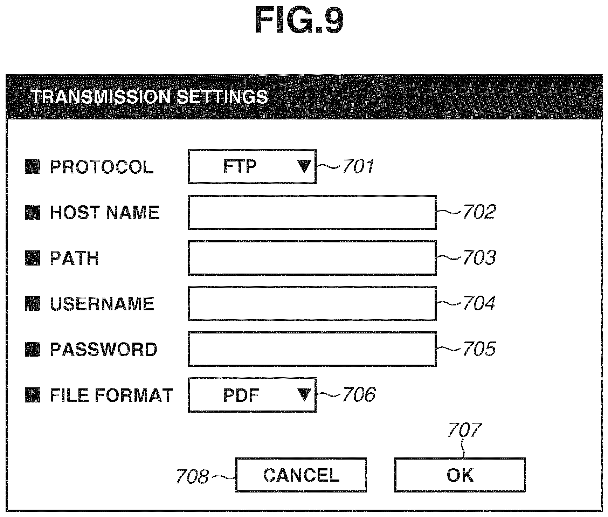

Fig. 9 illustrates one example of the operation screen displayed on the operation unit 220. The operation screen illustrated in Fig. 9 is displayed if FTP is selected in the area 601 illustrated in Fig. 8.

An area 701 is an area for receiving the selection of the transmission protocol, and indicates that FTP is selected. Areas 702 to 706 are similar to the areas described as the areas 602 to 606, and therefore detailed descriptions thereof will be omitted here.

If an OK key 707 is pressed, the transmission settings received via the screen are stored into the HDD 214 by the CPU 211. Then, the screen illustrated in Fig. 9 is closed, and the screen illustrated in Fig. 7 is displayed on the operation unit 220.

If a cancel key 708 is pressed, the transmission settings received via the screen are discarded. Then, the screen illustrated in Fig. 9 is closed, and the screen illustrated in Fig. 7 is displayed on the operation unit 220.

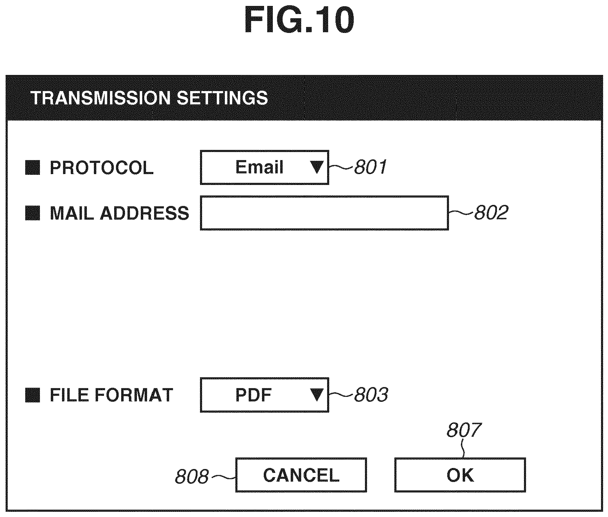

Fig. 10 illustrates one example of the operation screen displayed on the operation unit 220. The operation screen illustrated in Fig. 10 is displayed if Email is selected in the area 601 illustrated in Fig. 8.

An area 801 is an area for receiving the selection of the transmission protocol, and indicates that Email is selected.

An area 802 is an area for receiving a mail address to be set as the destination of the mail.

An area 803 is an area for receiving a selection of the file format. In the present example, PDF and TIFF are assumed to be displayed as options in a list presented in a drop-down format, but the area 803 may be prepared so as to include a file format other than them in the options.

If an OK key 807 is pressed, the transmission settings received via the screen are stored into the HDD 214 by the CPU 211. Then, the screen illustrated in Fig. 10 is closed, and the screen illustrated in Fig. 7 is displayed on the operation unit 220.

If a cancel key 808 is pressed, the transmission settings received via the screen are discarded. Then, the screen illustrated in Fig. 10 is closed, and the screen illustrated in Fig. 7 is displayed on the operation unit 220.

After receiving the settings in step S2002, in step S2003, the CPU 211 determines whether an instruction to start the transmission is received. The instruction to start the transmission is received according to pressing of a start key on the operation unit 220.

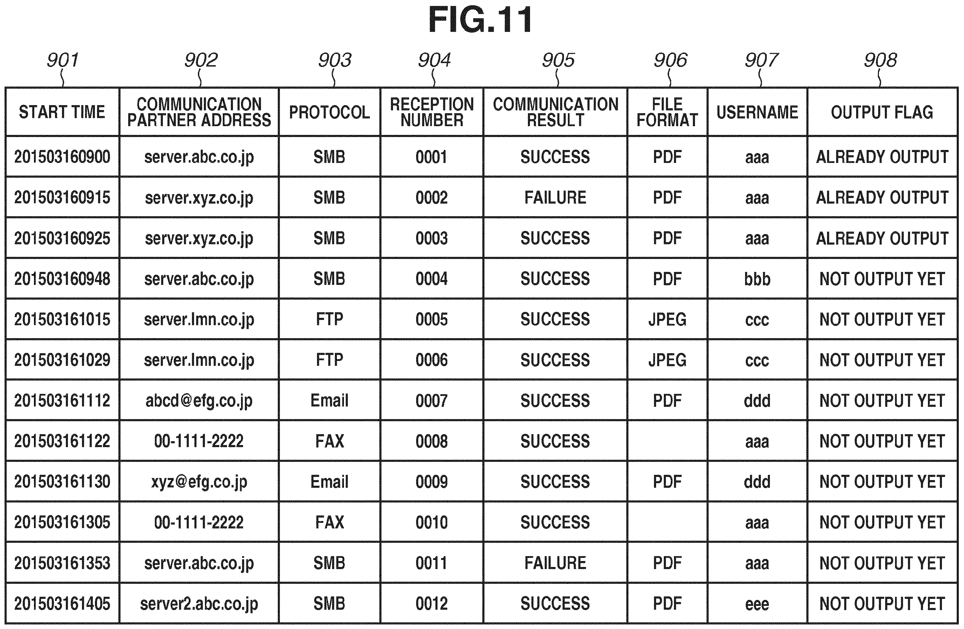

In step S2004, the CPU 211 updates a transmission history database illustrated in Fig. 11.

The transmission history database illustrated in Fig. 11 is stored in the HDD 214, and a plurality of transmission histories (execution histories of transmission jobs) can be stored in the transmission history database. The transmission history database includes columns that are a start time 901, a communication partner address 902, a protocol 903, a reception number 904, a communication result 905, a file format 906, a username 907, and an output flag 908. A record of a single transmission history is generated and managed per transmission job in the transmission history database.

The start time 901 indicates a time when the execution of the transmission job has been started. More specifically, the start time 901 is stored as information in which a number indicates a transmission time (what time the transmission has been carried out) in an order of a Western year, a month, a day, and a time. In the present example, the start time 901 has been described referring to the example that uses all of the Western year, the month, the day, and the time, but may not include the Western year or may include only the month and the day. The start time 901 may be expressed in a different manner as long as the start time 901 includes at least one or more piece (s) of time information among the Western year, the month, the day, and the time. Further, the start time 901 may include a character string indicating a day of the week. The start time 901 may be arranged in such a manner that the user can set which time information is stored via the operation unit 220.

The communication partner address 902 indicates the address of the destination to which the data has been transmitted.

The protocol 903 indicates the transmission protocol that has been used for the transmission of the data.

The reception number 904 indicates a number uniquely assigned to each record.

The communication result 905 indicates whether the transmission of the data has succeeded.

The file format 906 indicates what file format has been used as the file format of the file when the transmission target data has been converted into the file and transmitted as the file.

The username 907 indicates the name of the user who has instructed the MFP 101 to transmit the data.

The output flag 908 indicates whether an output (transmission or printing) to the external apparatus has been completed with respect to each record.

In step S2004, the CPU 211 updates the transmission history database structured in this manner.

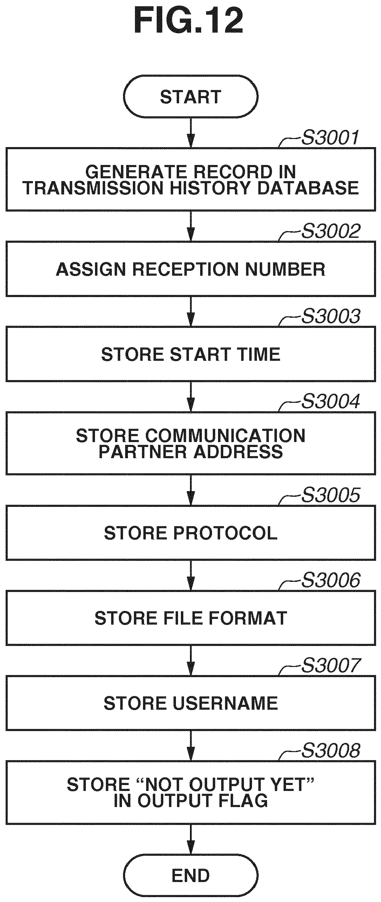

Fig. 12 illustrates details of processing performed in step S2004.

First, in step S3001 illustrated in Fig. 12, the CPU 211 adds one record to the transmission history database illustrated in Fig. 11.

In step S3002, the CPU 211 assigns the number that allows the record to be uniquely identified to the record in a field of the reception number 904. More specifically, the CPU 211 stores a reception number acquired by adding one to the reception number 904 having a largest number among the reception numbers 904 stored in the transmission history database, into the field of the reception number 904 corresponding to the record generated in step S3001.

In step S3003, the CPU 211 acquires a current time from the timer 230, and stores the acquired time into a field of the start time 901.

In step S3004, the CPU 211 stores the communication partner address set with use of any of the screens illustrated in Figs. 8 to 10 into a field of the communication partner address 902. If the transmission protocol is SMB, the host name set in the host name 602 is stored into the field of the communication partner address 902. If the transmission protocol is FTP, the host name set in the host name 702 is stored into the field of the communication partner address 902. If the transmission protocol is Email, the mail address set in the mail address 802 is stored into the field of the communication partner address 902.

In step S3005, the CPU 211 stores the transmission protocol selected in the area 601 illustrated in Fig. 8, the area 701 illustrated in Fig. 9, or the area 801 illustrated in Fig. 10 into a field of the protocol 903.

In step S3006, the CPU 211 stores the file format selected in the area 606 illustrated in Fig. 8, the area 706 illustrated in Fig. 9, or the area 803 illustrated in Fig. 10 into a field of the file format 906.

In step S3007, the CPU 211 stores the username of the user who is using the MFP 101 into a field of the username 907. At this time, the username of the user logged in to the MFP 101 that has been stored into the RAM 213 in step S1005 is stored into the field of the username 907.

In step S3008, the CPU 211 stores a value "not output yet" into a field of the output flag 908. This value indicates that a file has not been generated based on this record (no file containing this record has been generated), and has not been transmitted to the external apparatus as a communication management report. When a file is generated based on the record and is transmitted to the external apparatus as the communication management report, the value of the output flag 908 is updated from "not output yet" to "already output" by the CPU 211.

After the process of step S3008 is ended, the processing proceeds to step S2005 illustrated in Fig. 6.

In step S2005, the CPU 211 instructs the scanner 222 to read the original document according to the reading settings received via the screen illustrated in Fig. 7, thereby causing the scanner 222 to start reading the original document. The scanner 222 reads the original document to generate the image data of the original document, and transmits the generated image data to the CPU 211. The CPU 211 receives the image data transmitted from the scanner 222, and stores the received image data into the HDD 214.

In step S2006, the CPU 211 transmits the image data stored in the HDD 214 to the destination indicated by the communication partner address set with use of any of the operation screens illustrated in Figs. 8 to 10.

In step S2007, the CPU 211 determines whether the transmission of the image data has been completed. If the CPU 211 determines that the transmission of the image data has not been completed (NO in step S2007), the processing returns to step S2006, in which the CPU 211 continues transmitting the image data. On the other hand, if the CPU 211 determines that the transmission of the image data has been completed (YES in step S2007), the processing proceeds to step S2008.

In step S2008, the CPU 211 determines whether the transmission of the image data has succeeded. More specifically, the CPU 211 determines that the transmission of the image data has succeeded (YES in step S2008) according to receiving a response indicating that the image data has been normally received from the apparatus that is the transmission destination. On the other hand, the CPU 211 determines that the transmission of the image data has failed (NO in step S2008) if not receiving the response indicating that the image data has been normally received from the apparatus that is the transmission destination for a predetermined time period. If the CPU 211 determines that the transmission of the image data has succeeded (YES In step S2008), the processing proceeds to step S2009. If the CPU 211 determines that the transmission of the image data has failed (NO in step S2008), the processing proceeds to step S2011.

In step S2009, the CPU 211 stores a success, which indicates that the transmission has succeeded, into a field of the communication result 905 in the transmission history database.

If the processing proceeds to step S2011, the CPU 211 stores a failure, which indicates that the transmission has failed, into the field of the communication result 905 in the transmission history database.

In step S2010, the CPU 211 increments a value of a record number counter stored in the HDD 214 by one. The record number counter is used to recognize the total number of record(s) with the output flag(s) 908 thereof stored in a "not output yet" state among the records stored in the transmission history database. The value of the record number counter is set to zero when the MFP 101 is shipped from a factory, and is incremented each time the transmission job is carried out after that.

In the above-described manner, the MFP 101 carries out the transmission job that transmits the data to the specified destination.

Further, the MFP 101 stores the history of the executed transmission job in the HDD 214. Then, the MFP 101 displays the history of the transmission job illustrated in Fig. 11 on the display unit of the operation unit 220 when receiving a request to display the history of the transmission job from the operation unit 220 via the operation unit 220. Further, the MFP 101 can print the history of the transmission job stored in the transmission history database illustrated in Fig. 11 as the communication management report.

This output allows the administrator of the MFP 101 to confirm when the MFP 101 has carried out the transmission job, who has instructed the MFP 101 to carry out the transmission job, what kind of content the transmission job has had, and what kind of communication result the transmission job has resulted in.

Further, the MFP 101 according to the present exemplary embodiment can convert into a file and transmit the history of the transmission job stored in the transmission history database illustrated in Fig. 11 as the communication management report.

Now, this processing will be described.

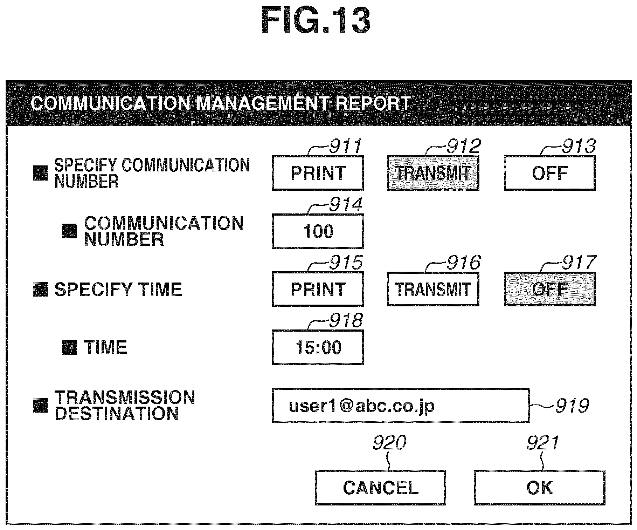

Fig. 13 illustrates an operation screen for setting a method for outputting the communication management report.

The operation screen illustrated in Fig. 13 includes a print key 911, a transmission key 912, an OFF key 913, and a communication number specifying field 914. The user operates them to configure settings for outputting the communication management report according to the number of record(s) in the "not output yet" state that is counted in step S2010.

The print key 911 is a key for specifying that, when the number of stored record(s) in the "not output yet" state that is counted in step S2010 reaches the number of record(s) specified in the communication number specifying field 914, the communication management report is printed according thereto.

The transmission key 912 is a key for specifying that, when the number of stored record (s) in the "not output yet" state that is counted in step S2010 reaches the number of record(s) specified in the communication number specifying field 914, the communication management report is transmitted according thereto.

The OFF key 913 is a key for disabling both of the function of printing the communication management report based on the number of record(s) in the "not output yet" state and the function of transmitting the communication management report based on the number of record(s) in the "not output yet" state.

Further, the operation screen illustrated in Fig. 13 includes a print key 915, a transmission key 916, an OFF key 917, and a time specifying field 918. The user operates them to configure settings for, when the time measured by the timer 320 reaches a predetermined time, outputting the communication management report according thereto.

The print key 915 is a key for specifying that, when the time measured by the timer 230 reaches a time specified in the time specifying field 918, the communication management report is printed according thereto.

The transmission key 916 is a key for specifying that, when the time measured by the timer 230 reaches the time specified in the time specifying field 918, the communication management report is transmitted according thereto.

The OFF key 917 is a key for disabling the function of, when the time measured by the timer 230 reaches the time specified in the time specifying field 918, outputting the communication management report according thereto.

A transmission destination field 919 is a field for specifying a destination to which the communication management report is transmitted.

If an OK key 921 is pressed, the settings received via the screen illustrated in Fig. 13 are stored into the HDD 214 by the CPU 211, and the screen illustrated in Fig. 13 is closed.

If a cancel key 920 is pressed, the transmission settings received via the screen are discarded, and the screen illustrated in Fig. 13 is closed.

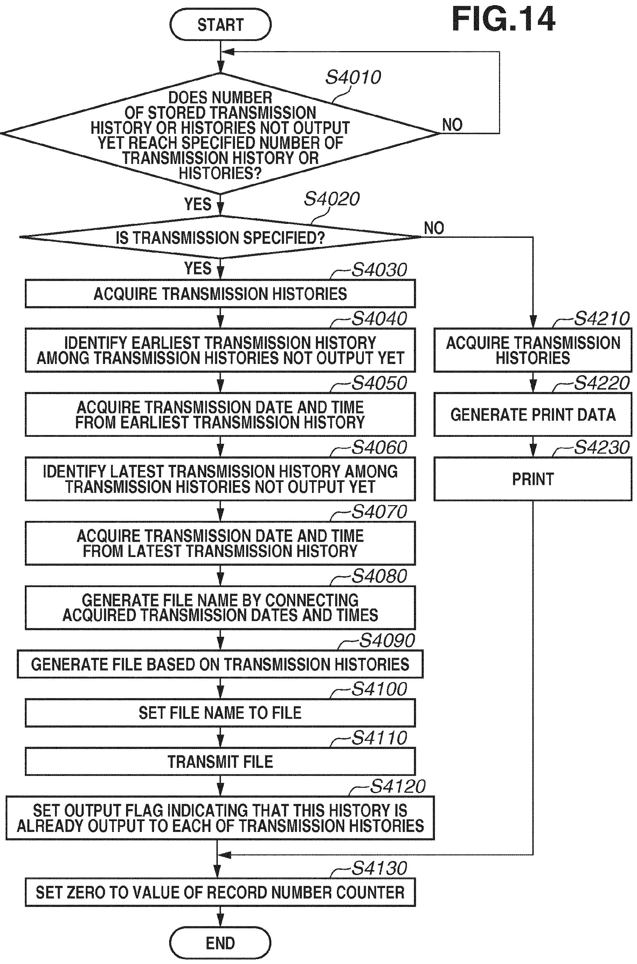

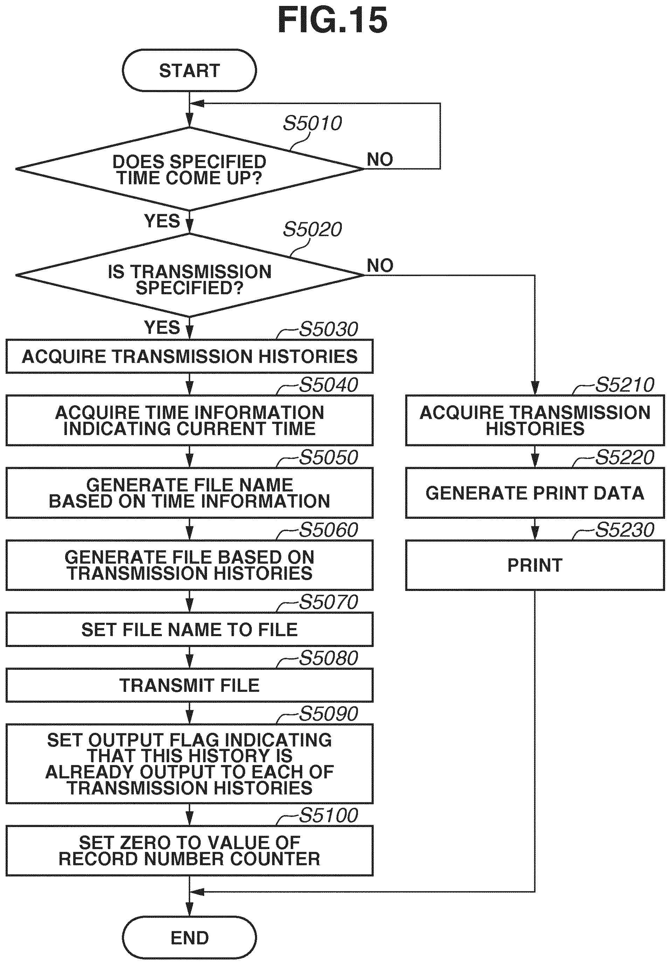

The CPU 211 outputs (transmits or prints) the communication management report according to the settings received via the operation screen illustrated in Fig. 13. This will be described with reference to flowcharts illustrated in Figs. 14 and 15.

The CPU 211 reads out the program stored in the ROM 212 into the RAM 213 and executes the read program, by which each of the processing illustrated in the flowchart of Fig. 14 and the processing illustrated in the flowchart of Fig. 15 is realized.

The processing illustrated in the flowchart of Fig. 14 is performed if the print key 911 or the transmission key 912 illustrated in Fig. 13 is specified. In other words, the processing illustrated in the flowchart of Fig. 14 is not performed if the OFF key 913 illustrated in Fig. 13 is specified. The processing illustrated in the flowchart of Fig. 15 is performed if the print key 915 or the transmission key 916 illustrated in Fig. 13 is specified. In other words, the processing illustrated in the flowchart of Fig. 15 is not performed if the OFF key 917 illustrated in Fig. 13 is specified.

Further, a process of step S4010 illustrated in the flowchart of Fig. 14, and a process of step S5010 illustrated in the flowchart of Fig. 15 are assumed to be performed by the CPU 211 in parallel with each other.

Fig. 14 is a flowchart illustrating processing in which the MFP 101 outputs (transmits or prints) the communication management report on condition that the number of stored record (s) in the "not output yet" state reaches the number of record(s) specified in the communication number specifying field 914.

In step S4010, the CPU 211 determines whether the number of stored record (s) in the "not output yet" state reaches the number of record(s) specified in the communication number specifying field 914. More specifically, the CPU 211 determines whether the number of stored record (s) in the "not output yet" state that has been counted in step S2010 reaches the number of record(s) specified in the communication number specifying field 914. If the CPU 211 determines that the number of stored record(s) in the "not output yet" state does not reach the number of record(s) specified in the communication number specifying field 914 (NO in step S4010), the process of step S4010 is repeated. On the other hand, if the CPU 211 determines that the number of stored record(s) in the "not output yet" state reaches the number of record(s) specified in the communication number specifying field 914 (YES in step S4010), the processing proceeds to step S4020.

In step S4020, the CPU 211 determines whether the transmission is specified with use of the transmission key 912 on the screen illustrated in Fig. 13. If the CPU 211 determines that the transmission is specified with use of the transmission key 912 (YES in step S4020), the processing proceeds to step S4030. On the other hand, if the print key 911 is specified, the CPU 211 determines that the transmission is not specified (NO in step S4020), and then the processing proceeds to step S4210.

In step S4030, the CPU 211 acquires the transmission history database illustrated in Fig. 11 from the HDD 214, and stores the acquired transmission history database into the RAM 213.

In step S4040, the CPU 211 identifies a record corresponding to an earliest start time 901 among the records each having the output flag 908 indicating that this record is not output yet in the transmission history database.

In step S4050, the CPU 211 acquires a value of the start time 901 from the record corresponding to the earliest start time 901, and stores the acquired value into the RAM 213.

In step S4060, the CPU 211 identifies a record corresponding to a latest start time 901 among the records each having the output flag 908 indicating that this record is not output yet in the transmission history database.

In step S4070, the CPU 211 acquires a value of the start time 901 from the record corresponding to the latest start time 901, and stores the acquired value into the RAM 213.

In step S4080, the CPU 211 generates a character string indicating a file name by hyphening the value of the start time 901 acquired in step S4050 and the value of the start time 901 acquired in step S4070. This is processing for generating the file name. In the present example, the processing for generating the file name has been described referring to the example that hyphens the values of the start times 901, but the hyphen is one example of a symbol and the present invention is not limited thereto. Besides the hyphen, an underscore or an asterisk may be used as the symbol. The processing for generating the file name may be configured in such a manner that the user can set which symbol is used via the operation unit 220. Further or alternatively, the processing for generating the file name may be configured in such a manner that the user can input another symbol via the operation unit 220.

A specific example of the processing for generating the file name will be described. When the file name is generated from the transmission histories illustrated in Fig. 11, the file name is generated in the following manner. First, the CPU 211 acquires "201503160948", which is the start time 901 of the record corresponding to the earliest start time 901 among the records each having the output flag 908 indicating that this record is not output yet. Then, the CPU 211 acquires "201503161405", which is the start time 901 of the record having the latest start time 901 among the records each corresponding to the output flag 908 indicating that this record is not output yet. After that, the CPU 211 generates a file name "201503160948-201503161405" as the file name by hyphening them. The CPU 211 may add an extension of the file name at the end, like "201503160948-201503161405.csv". This naming allows the administrator managing the transmission histories to easily search for a file storing a transmission history that the administrator wants to view. For example, if the administrator wants to view a transmission history transmitted at around eleven o'clock on March 16, 2015, the administrator refers to the file name "201503160948-201503161405.csv", and can easily understand that the administrator can view the transmission result by opening the file.

In the present example, the processing for generating the file name has been described referring to the example in which all of the Western year, the month, the day, and the time are acquired from the transmission history table in which all of the Western year, the month, the day, and the time are stored, but the present invention is not limited thereto. For example, the processing for generating the file name may be configured in such a manner that the CPU 211 acquires only the month, the day, and the time without acquiring the Western year to generate the file name, or may be configured in such a manner that the CPU 211 acquires only the Western year, the month, and the day without acquiring the time to generate the file name. Further or alternatively, the processing for generating the file name may be configured in such a manner that the user can set which time information is used via the operation unit 220.

In step S4090, the CPU 211 extracts the records each having the output flag 908 indicating that this record is not output yet in the transmission history database stored into the RAM 213 in step S4030, and generates a comma-separated values (csv) file containing the extracted records.

In step S4100, the CPU 211 sets the file name generated in step S4080 as a file name of the file generated in step S4090.

In step S4110, the CPU 211 transmits the file (the communication management report) generated in step S4090 to the transmission destination specified in the transmission destination field 919 while attaching the file to an electronic mail. The method for this transmission may be file transmission based on FTP or SMB. More specifically, the CPU 211 may transmit the communication management report by either method, like transmitting the communication management report via the electronic mail if an electronic mail address is specified in the transmission destination field 919, and transmitting the communication management report to a server via FTP or SMB if a host name of the server is specified in the transmission destination field 919.

In step S4120, the CPU 211 changes the output flags 908 of the records, based on which files have been generated and transmitted, among the transmission histories read out into the RAM 213, from "not output yet" to "already output".

In step S4130, the CPU 211 sets the value of the record number counter to zero. Then, the processing illustrated in the flowchart of Fig. 14 is ended. After the processing is ended, the CPU 211 repeats the process of step S4010 again.

On the other hand, if the processing proceeds from step S4020 to step S4210, the CPU 211 acquires the transmission histories illustrated in Fig. 11 from the HDD 214, and stores the acquired transmission histories into the RAM 213.

In step S4220, the CPU 211 extracts the records each having the output flag 908 indicating that this record is not output yet in the transmission history database stored into the RAM 213 in step S4210, and generates image data for printing that contains the extracted records.

In step S4230, the CPU 211 transmits the print data generated in step S4220 to the printer 221, and causes the printer 221 to carry out printing based on the print data. Then, the processing proceeds to step S4130.

Fig. 15 is a flowchart illustrating processing in which, when the time measured by the timer 230 reaches the predetermined time, the MFP 101 outputs (transmits or prints) the communication management report according thereto.

In step S5010, the CPU 211 determines whether the time measured by the timer 230 reaches the predetermined time. If the CPU 211 determines that the time measured by the timer 230 reaches the predetermined time (YES in step S5010), the processing proceeds to step S5020. If the CPU 211 determines that the time measured by the timer 230 does not reach the predetermined time (NO in step S5010), the process of step S5010 is repeated.

In step S5020, the CPU 211 determines whether the transmission is specified with use of the transmission key 916 on the screen illustrated in Fig. 13. If the CPU 211 determines that the transmission is specified (YES in step S5020), the processing proceeds to step S5030. On the other hand, if the print key 915 is specified, the CPU 211 determines that the transmission is not specified (NO in step S5020), and then the processing proceeds to step S5210.

In step S5030, the CPU 211 acquires the transmission histories illustrated in Fig. 11 from the HDD 214, and stores the acquired transmission histories into the RAM 213.

In step S5040, the CPU 211 acquires the current time measured by the timer 230, and stores the acquired time into the RAM 213.

In step S5050, the CPU 211 generates the file name based on the time stored into the RAM 213 in step S5040, and stores the generated file name into the RAM 213. For example, if the time when the process of step S5040 has been performed is March 16, 2015, 15:00, the CPU 211 generates a file name "210503161500". In the present example, the processing for generating the file name has been described referring to the example that generates the file name with use of all of the Western year, the month, the day, and the time, but the present invention is not limited thereto. For example, the processing for generating the file name may be configured in such a manner that the CPU 211 generates the file name with use of only the month, the day, and the time with no use of the Western year, or may be configured in such a manner that the CPU 211 generates the file name with use of only the Western year, the month, and the day with no use of the time. Further or alternatively, the processing for generating the file name may be configured in such a manner that the user can set which time information is used via the operation unit 220.

In step S5060, the CPU 211 extracts the records each having the output flag 908 indicating that this record is not output yet in the transmission history database stored into the RAM 213 in step S5030, and generates a csv file containing the extracted records.

In step S5070, the CPU 211 sets the file name generated in step S5050 as a file name of the file generated in step S5060.

In step S5080, the CPU 211 transmits the file (the communication management report) generated in step S5060 to the transmission destination specified in the transmission destination field 919 while attaching the file to an electronic mail. The method for this transmission may be file transmission based on FTP or SMB. More specifically, the CPU 211 may transmit the communication management report by either method, like transmitting the communication management report via the electronic mail if an electronic mail address is specified in the transmission destination field 919, and transmitting the communication management report to a server via FTP or SMB if a host name of the server is specified in the transmission destination field 919.

In step S5090, the CPU 211 changes the output flags 908 of the records with respect to which the transmission has been completed among the transmission histories read out into the RAM 213 from "not output yet" to "already output".

In step S5100, the CPU 211 sets the value of the record number counter to zero. Then, the processing illustrated in the flowchart of Fig. 15 is ended. After the processing is ended, the CPU 211 repeats the process of step S5010 again.

On the other hand, if the processing proceeds from step S5020 to step S5210, the CPU 211 acquires the transmission histories illustrated in Fig. 11 from the HDD 214, and stores the acquired transmission histories into the RAM 213.

In step S5220, the CPU 211 extracts the records each having the output flag 908 indicating that this record is not output yet in the transmission history database stored into the RAM 213 in step S5210, and generates image data for printing that contains the extracted records.

In step S5230, the CPU 211 transmits the print data generated in step S5220 to the printer 221, and causes the printer 221 to carry out printing based on the print data.

The execution of the above-described control allows the administrator to know when the transmission indicated in the transmission result stored in the communication management report has been carried out from the file name of the communication management report.

In the above-described exemplary embodiment, the CPU 211 acquires "201503160948", which is the start time 901 of the record corresponding to the earliest start time 901 among the records that are not output yet. Then, the CPU 211 acquires "201503161405", which is the start time 901 of the record corresponding to the latest start time 901 among the records that are not output yet. Then, the CPU 211 sets the character string acquired by connecting them as the file name.

However, examples not embodying the present invention are not limited thereto. In a first example not embodying the present invention, the CPU 211 may acquire only "201503160948", which is the start time 901 of the record corresponding to the earliest start time 901 among the records that are not output yet, and assign a file name "201503160948" to the file. Alternatively, the CPU 211 may generate a file name "201503160948.csv".

Alternatively, in a second example not embodying the present invention, the CPU 211 may acquire "201503161405", which is the start time 901 of the record corresponding to the latest start time 901 among the records that are not output yet, and assign a file name "201503161405" to the file. Alternatively, the CPU 211 may generate a file name "201503161405.csv" by adding the extension.

Alternatively, in a third example not embodying the present invention, the CPU 211 may acquire the value of the communication partner address 902 and generate the file name with use of the value as the file name, instead of the start time 901. In this case, the CPU 211 generates a file name "server.abc.co.jp", which is the communication partner address 902 of the record corresponding to the earliest start time 901 among the records that are not output yet. Alternatively, the CPU 211 generates a file name "server2.abc.co.jp", which is the communication partner address 902 of the record corresponding to the latest start time 901 among the records that are not output yet. Alternatively, the CPU 211 may generate the file name by connecting the communication partner address 902 of the record corresponding to the earliest start time 901 among the records that are not output yet, and the communication partner address 902 of the record corresponding to the latest start time 901 among the records that are not output yet. In the case of the example illustrated in Fig. 11, a file name "server.abc.co.jp-server2.abc.co.jp" is generated.

Alternatively, in a fourth example not embodying the present invention, the CPU 211 may acquire the value of the username 907 and generate the file name with use of the value as the file name, instead of the start time 901. The CPU 211 generates a file name "aaa", which is the username 907 of the record corresponding to the earliest start time 901 among the records that are not output yet. Alternatively, the CPU 211 generates a file name "eee", which is the username 907 of the record corresponding to the latest start time 901 among the records that are not output yet. Alternatively, the CPU 211 may generate the file name by connecting the username 907 of the record corresponding to the earliest start time 901 among the records that are not output yet, and the username 907 of the record corresponding to the latest start time 901 among the records that are not output yet. In the case of the example illustrated in Fig. 11, a file name "aaa-eee" is generated.

Alternatively, in a fifth example not embodying the present invention, the CPU 211 may acquire the value of the reception number 904 and generate the file name with use of the value as the file name, instead of the start time 901. The CPU 211 generates a file name "0004", which is the reception number 904 of the record corresponding to the earliest start time 901 among the records that are not output yet. Alternatively, the CPU 211 generates a file name "0012", which is the reception number 904 of the record corresponding to the latest start time 901 among the records that are not output yet. Alternatively, the CPU 211 may generate the file name by connecting the reception number 904 of the record corresponding to the earliest start time 901 among the records that are not output yet, and the reception number 904 of the record corresponding to the latest start time 901 among the records that are not output yet. In the case of the example illustrated in Fig. 11, a file name "0004-0012" is generated.

Further, the extension indicating the file format may be added to the file names described in the other exemplary embodiments.

Further or alternatively, in a sixth example not embodying the present invention, the processing for generating the file name may be configured in such a manner that the user can select an item to be used as the file name via the operation unit 220, and may be configured in such a manner that the user can select a combination and/or an order of a plurality of items.

In the above-described exemplary embodiment, the processing for updating the transmission history database has been described referring to the example that stores the time immediately after the transmission instruction is received as the start time 901 in step S3003, but examples not embodying the present invention are not limited thereto. For example, this processing may be configured to store an end time of the transmission, or may be configured to store a start time at which the MFP 101 starts the transmission processing immediately before carrying out the transmission in step S2006 after starting reading the original document in step S2005.

Further, in the above-described exemplary embodiment, the processing for outputting the communication management report has been described referring to the example in which the CPU 211 performs the processes from steps S4030 to S4120 if determining that the number of stored record(s) in the "not output yet" state reaches the number of record(s) specified in the communication number specifying field 914 and determining that the transmission is specified in step S4020. On the other hand, this processing has been described referring to the example in which the CPU 211 performs the processes of steps S5030 to S5090 if determining that the time measured by the timer 230 reaches the predetermined time and determining that the transmission is specified in step S5020. However, the present invention is not limited thereto. The CPU 211 may perform the processes of steps S5030 to S5090 if determining that the number of stored record(s) in the "not output yet" state reaches the number of record(s) specified in the communication number specifying field 914 and determining that the transmission is specified in step S4020. Further, the CPU 211 may perform the processes of steps S4030 to S4120 if determining that the time measured by the timer 230 reaches the predetermined time and determining that the transmission is specified in step S5020. Alternatively, the CPU 211 may perform the processes of steps S4030 to S4120 regardless of which condition is satisfied. Alternatively, the CPU 211 may perform the processes of steps S5030 to S5090 regardless of which condition is satisfied.

In the above-described exemplary embodiment, the output of the execution history has been described referring to the example that manages the transmission history and transmits the communication management report containing the transmission history, but the present invention is not limited thereto. The present invention may be applied to processing for managing a job history of a copy job that reads the image on the original document by the scanner 222 and prints the read image by the printer 221, and transmitting a history report containing the job history of the copy job. Further, the present invention may be applied to processing for managing a history of a print job that prints the image by the printer 221 based on print data received from the PC 103 via the LAN 100, and transmitting a history report containing the job history of the print job.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

The scope of the invention is defined by the appended claims.

## Claims

1. A data processing apparatus (101) comprising:
a file generation means (211) for generating a file based on a job history, wherein the job history includes a plurality of job execution history records and each job execution history record includes at least a start time (901) when execution of a job has been started and an execution result (905) of the job,
**characterized in that** the data processing apparatus further comprises
a file name generation means (211) for generating a file name of the file based on a start time included in a job execution history record corresponding to an earliest start time and a start time included in a job execution history record corresponding to a latest start time, among the plurality of job execution history records included in the generated file.

2. The data processing apparatus according to claim 1, wherein the file name generation means generates the file name by connecting, with a symbol, the start time included in the job execution history record corresponding to the earliest start time and the start time included in the job execution history records corresponding to the latest start time, among the job execution history records based on which a file has not already been generated.

3. The data processing apparatus according to claim 1,
wherein each job execution history record included in the job history includes information (908) indicating whether a file has been generated by the file generation means (211).

4. The data processing apparatus according to any one of claims 1 to 3, further comprising:
a storage means (214) for storing a plurality of job execution history records as the job history; and
a determination means (211) for determining whether a predetermined number of job execution history records has been stored in the storage means,
wherein, in a case where the determination means determines that the predetermined number of job execution history records has been stored in the storage means, the file generation means generates a file based on the job execution history records stored by the storage means and the file name generation means (211) generates a file name of the generated file based on a start time included in a job execution history record corresponding to an earliest start time and a start time included in a job execution history record corresponding to a latest start time, among the plurality of job execution history records included in the generated file.

5. The data processing apparatus according to claim 4,
wherein the determination means (211) further determines whether a predetermined time has come, and
wherein, in a case where the determination means determines that the predetermined time has come, the file generation means generates a file based on the plurality of job execution history records stored by the storage means and the file name generation means (211) generates a file name of the generated file based on current time information.

6. The data processing apparatus according to any one of claims 1 to 5, further comprising a transmission means (211) for transmitting the plurality of job execution history records as the file generated by the file generation means.

7. The data processing apparatus according to claim 6, further comprising a specifying means (220) for specifying a destination to which the file is transmitted,
wherein the transmission means transmits the file to the destination specified by the specifying means.

8. The data processing apparatus according to claim 1, wherein the start time is a time when the execution of a transmission job has been started, and the execution result is a communication result of the transmission job.

9. The data processing apparatus according to claim 1, wherein the start time is a time when the execution of a printing job has been started, and the execution result is a printing result of the printing job.

10. A method for controlling a data processing apparatus, the method comprising:
generating a file, based on a job history, wherein the job history includes a plurality of job execution history records and each job execution history record includes at least a start time (901) when execution of a job has been started and an execution result (905) of the job; and
generating a file name of the file based on a start time included in a job execution history record corresponding to an earliest start time and a start time included in a job execution history record corresponding to a latest start time, among the plurality of job execution history records included in the generated file.

11. A program which when run on a data processing apparatus causes the apparatus to perform the method of claim 10.

## Patentansprüche

1. Datenverarbeitungsvorrichtung (101), umfassend:
eine Dateierzeugungseinrichtung (211) zum Erzeugen einer Datei basierend auf einem Auftragsverlauf, wobei der Auftragsverlauf mehrere Auftragsausführungsverlaufseinträge enthält und ein jeweiliger Auftragsausführungsverlaufseintrag mindestens eine Startzeit (901), zu der eine Ausführung eines Auftrags gestartet worden ist, sowie ein Ausführungsergebnis (905) des Auftrags enthält,
**dadurch gekennzeichnet, dass** die Datenverarbeitungsvorrichtung ferner umfasst:
eine Dateinamenerzeugungseinrichtung (211) zum Erzeugen eines Dateinamens der Datei basierend auf einer Startzeit in einem einer frühesten Startzeit entsprechenden Auftragsausführungsverlaufseintrag und einer Startzeit in einem einer spätesten Startzeit entsprechenden Auftragsausführungsverlaufseintrag unter den mehreren in der erzeugten Datei enthaltenen Auftragsausführungsverlaufseinträgen.

2. Datenverarbeitungsvorrichtung nach Anspruch 1, wobei die Dateinamenerzeugungseinrichtung den Dateinamen durch Verbinden, mithilfe eines Symbols, der Startzeit im der frühesten Startzeit entsprechenden Auftragsausführungsverlaufseintrag mit der Startzeit im der spätesten Startzeit entsprechenden Auftragsausführungsverlaufseintrag erzeugt, und zwar unter den Auftragsausführungsverlaufseinträgen, auf deren Basis noch keine Datei erzeugt worden ist.

3. Datenverarbeitungsvorrichtung nach Anspruch 1, wobei ein jeweiliger im Auftragsverlauf enthaltener Auftragsausführungsverlaufseintrag Information (908) enthält, die angibt, ob eine Datei durch die Dateierzeugungseinrichtung (211) erzeugt worden ist.

4. Datenverarbeitungsvorrichtung nach einem der Ansprüche 1 bis 3, ferner umfassend:
eine Speichereinrichtung (214) zum Speichern mehrerer Auftragsausführungsverlaufseinträge als der Auftragsverlauf; und
eine Bestimmungseinrichtung (211) zum Bestimmen, ob eine vorbestimmte Anzahl Auftragsausführungsverlaufseinträge in der Speichereinrichtung gespeichert worden ist,
wobei, falls die Bestimmungseinrichtung bestimmt, dass die vorbestimmte Anzahl Auftragsausführungsverlaufseinträge in der Speichereinrichtung gespeichert worden ist, die Dateierzeugungseinrichtung eine Datei basierend auf den durch die Speichereinrichtung gespeicherten Auftragsausführungsverlaufseinträgen erzeugt und die Dateinamenerzeugungseinrichtung (211) einen Dateinamen der erzeugten Datei basierend auf einer Startzeit in einem einer frühesten Startzeit entsprechenden Auftragsausführungsverlaufseintrag und einer Startzeit in einem einer spätesten Startzeit entsprechenden Auftragsausführungsverlaufseintrag erzeugt, und zwar unter den mehreren in der erzeugten Datei enthaltenen
Auftragsausführungsverlaufseinträgen.

5. Datenverarbeitungsvorrichtung nach Anspruch 4,
wobei die Bestimmungseinrichtung (211) ferner bestimmt, ob eine vorbestimmte Zeit gekommen ist, und
wobei, falls die Bestimmungseinrichtung bestimmt, dass die vorbestimmte Zeit gekommen ist, die Dateierzeugungseinrichtung eine Datei basierend auf den mehreren durch die Speichereinrichtung gespeicherten Auftragsausführungsverlaufseinträgen erzeugt und die Dateinamenerzeugungseinrichtung (211) einen Dateinamen der erzeugten Datei basierend auf aktueller Zeitinformation erzeugt.

6. Datenverarbeitungsvorrichtung nach einem der Ansprüche 1 bis 5, ferner umfassend eine Übertragungseinrichtung (211) zum Übertragen der mehreren Auftragsausführungsverlaufseinträge als die durch die Dateierzeugungseinrichtung erzeugte Datei.

7. Datenverarbeitungsvorrichtung nach Anspruch 6, ferner umfassend eine Spezifizierungseinrichtung (220) zum Spezifizieren eines Ziels, an welches die Datei übertragen wird,
wobei die Übertragungseinrichtung die Datei an das durch die Spezifizierungseinrichtung spezifizierte Ziel überträgt.

8. Datenverarbeitungsvorrichtung nach Anspruch 1, wobei es sich bei der Startzeit um eine Zeit handelt, zu der die Ausführung eines Übertragungsauftrags gestartet worden ist, und es sich bei dem Ausführungsergebnis um ein Kommunikationsergebnis des Übertragungsauftrags handelt.

9. Datenverarbeitungsvorrichtung nach Anspruch 1, wobei es sich bei der Startzeit um eine Zeit handelt, zu der die Ausführung eines Druckauftrags gestartet worden ist, und es sich bei dem Ausführungsergebnis um ein Druckergebnis des Druckauftrags handelt.

10. Verfahren zum Steuern einer Datenverarbeitungsvorrichtung, wobei das Verfahren umfasst:
Erzeugen einer Datei basierend auf einem Auftragsverlauf, wobei der Auftragsverlauf mehrere Auftragsausführungsverlaufseinträge enthält und ein jeweiliger Auftragsausführungsverlaufseintrag mindestens eine Startzeit (901), zu der eine Ausführung eines Auftrags gestartet worden ist, sowie ein Ausführungsergebnis (905) des Auftrags enthält; und
Erzeugen eines Dateinamens der Datei basierend auf einer Startzeit in einem einer frühesten Startzeit entsprechenden Auftragsausführungsverlaufseintrag und einer Startzeit in einem einer spätesten Startzeit entsprechenden Auftragsausführungsverlaufseintrag unter den mehreren in der erzeugten Datei enthaltenen Auftragsausführungsverlaufseinträgen.

11. Programm, welches bei Ausführung auf einer Datenverarbeitungsvorrichtung die Vorrichtung veranlasst, das Verfahren nach Anspruch 10 durchzuführen.

## Revendications

1. Appareil de traitement de données (101), comprenant :
un moyen de génération de fichier (211) destiné à générer un fichier sur la base d'un historique de tâche, où l'historique de tâche comprend une pluralité d'enregistrements d'historique d'exécution de tâche et chaque enregistrement d'historique d'exécution de tâche comprend au moins un instant de début (901) correspondant au début d'exécution d'une tâche et un résultat d'exécution (905) de la tâche,
l'appareil de traitement de données étant **caractérisé en ce qu'**il comprend en outre
un moyen de génération de nom de fichier (211) destiné à générer un nom de fichier du fichier sur la base d'un instant de début compris dans un enregistrement d'historique d'exécution de tâche correspondant à un instant de début le plus tôt et d'un instant de début compris dans un enregistrement d'historique d'exécution de tâche correspondant à un instant de début le plus tard, parmi la pluralité d'enregistrements d'historique d'exécution de tâche compris dans le fichier généré.

2. Appareil de traitement de données selon la revendication 1, dans lequel le moyen de génération de nom de fichier génère le nom de fichier par une liaison, au moyen d'un symbole, de l'instant de début compris dans l'enregistrement d'historique d'exécution de tâche correspondant à l'instant de début le plus tôt et de l'instant de début compris dans les enregistrements d'historique d'exécution de tâche correspondant à l'instant de début le plus tard, parmi les enregistrements d'historique d'exécution de tâche sur la base d'un fichier qui n'a pas encore été généré.

3. Appareil de traitement de données selon la revendication 1,
dans lequel chaque enregistrement d'historique d'exécution de tâche compris dans l'historique de tâche comprend des informations (908) indiquant si un fichier a été généré par le moyen de génération de fichier (211).

4. Appareil de traitement de données selon l'une quelconque des revendications 1 à 3, comprenant en outre :
un moyen de mémorisation (214) destiné à mémoriser une pluralité d'enregistrements d'historique d'exécution de tâche en tant que l'historique de tâche ; et
un moyen de détermination (211) destiné à déterminer si un nombre prédéterminé d'enregistrements d'historique d'exécution de tâche a été mémorisé dans le moyen de mémorisation,
dans lequel, dans un cas dans lequel le moyen de détermination détermine que le nombre prédéterminé d'enregistrements d'historique d'exécution de tâche a été mémorisé dans le moyen de mémorisation, le moyen de génération de fichier génère un fichier sur la base des enregistrements d'historique d'exécution de tâche mémorisés dans le moyen de mémorisation et le moyen de génération de nom de fichier (211) génère un nom de fichier du fichier généré sur la base d'un instant de début compris dans un enregistrement d'historique d'exécution de tâche correspondant à un instant de début le plus tôt et d'un instant de début compris dans un enregistrement d'historique d'exécution de tâche correspondant à un instant de début le plus tard, parmi la pluralité d'enregistrements d'historique d'exécution de tâche compris dans le fichier généré.

5. Appareil de traitement de données selon la revendication 4,
dans lequel le moyen de détermination (211) détermine en outre l'atteinte éventuelle d'un instant prédéterminé, et
dans lequel, dans un cas dans lequel le moyen de détermination détermine que l'instant prédéterminé est atteint, le moyen de génération de fichier génère un fichier sur la base de la pluralité d'enregistrements d'historique d'exécution de tâche mémorisés par le moyen de mémorisation et le moyen de génération de nom de fichier (211) génère un nom de fichier du fichier généré sur la base d'informations temporelles courantes.

6. Appareil de traitement de données selon l'une quelconque des revendications 1 à 5, comprenant en outre un moyen de transmission (211) destiné à transmettre la pluralité d'enregistrements d'historique d'exécution de tâche en tant que le fichier généré par le moyen de génération de fichier.

7. Appareil de traitement de données selon la revendication 6, comprenant en outre un moyen de spécification (220) destiné à spécifier une destination à laquelle est transmis le fichier,
dans lequel le moyen de transmission transmet le fichier à la destination spécifiée par le moyen de spécification.

8. Appareil de traitement de données selon la revendication 1, dans lequel l'instant de début est un instant correspondant à un début de l'exécution d'une tâche de transmission, et le résultat d'exécution est un résultat de communication de la tâche de transmission.

9. Appareil de traitement de données selon la revendication 1, dans lequel l'instant de début est un instant correspondant à un début de l'exécution d'une tâche d'impression, et le résultat d'exécution est un résultat d'impression de la tâche d'impression.

10. Procédé de commande d'un appareil de traitement de données, le procédé comprenant les étapes consistant à :
générer un fichier, sur la base d'un historique de tâche, où l'historique de tâche comprend une pluralité d'enregistrements d'historique d'exécution de tâche et chaque enregistrement d'historique d'exécution de tâche comprend au moins un instant de début (901) correspondant au début d'exécution d'une tâche et un résultat d'exécution (905) de la tâche ; et
générer un nom de fichier du fichier sur la base d'un instant de début compris dans un enregistrement d'historique d'exécution de tâche correspondant à un instant de début le plus tôt et d'un instant de début compris dans un enregistrement d'historique d'exécution de tâche correspondant à un instant de début le plus tard, parmi la pluralité d'enregistrements d'historique d'exécution de tâche compris dans le fichier généré.

11. Programme qui, lorsqu'il est exécuté sur un appareil de traitement de données, amène l'appareil à mettre en œuvre le procédé selon la revendication 10.
